# EUROPEAN PATENT SPECIFICATION

(11) **EP 1 423 626 B1**
(45) Date of publication and mention of the grant of the patent: **08.12.2004**
(21) Application number: 02777003.1
(22) Date of filing: 05.09.2002
(51) Int. Cl.: F16D 59/02, B60T 13/74

(54) **ELECTROMAGNETIC BRAKE WITH VARIABLE SPRING RATE DAMPING MEMBERS**
ELEKTROMAGNETISCHE BREMSE MIT DÄMPFUNGSGLIEDERN UNTERSCHIEDLICHER FEDERSTEIFIGKEIT
FREIN ELECTROMAGNETIQUE AVEC ELEMENTS AMORTISSEUR DE RAIDEUR DE RESSORT VARIABLE

(30) Priority: 05.09.2001 DE 10143499
(43) Date of publication of application: 02.06.2004
(73) Proprietor: Chr. Mayr GmbH & Co. KG, D-87665 Mauerstetten (DE)
(72) Inventor: WEISS, Harald, 87677 Stöttwang (DE); VOGT, Herbert, 87665 Mauerstetten (DE); HECHT, Martin, 87600 Kaufbeuren (DE)
(74) Representative: Ruschke, Hans Edvard, Dipl.-Ing.
(86) International application number: PCT/EP2002/009947
(87) International publication number: WO 2003/023245

(56) References cited:
- WO-A-98/21496
- US-B1- 6 182 803
- PATENT ABSTRACTS OF JAPAN vol. 2000, no. 16, 8 May 2001 (2001-05-08) & JP 2001 020984 A (TOYOTA MOTOR CORP), 23 January 2001 (2001-01-23)

## Description

The invention relates to a means for silencing mechanical brakes having the features of the preamble of claims 1 and 10, i.e. to zero-current-actuated electromagnetic compression spring brakes for safe braking and precise positioning of rotating masses, or to clutch brake assemblies or to other conventional safety and/or holding brakes and the like.

Mechanical brakes, e.g. friction brakes tend to vibrate, resulting in a noise nuisance from the shock impact of mechanical elements, among other reasons. Apart from this, such shock impact and vibrations may also cause damage to the mechanical elements. In conclusion, such noise is a nuisance to anybody in the vicinity.

Brakes as used in theater applications and on elevator systems need to be very quiet in operation despite being actuated very frequently. This necessitates, in addition to special electromagnetic circuitry, not detailled in the context of the present description, special silencing means of a mechanical nature and influencing the magnetic flux.

In electromagnetic brakes and clutches a distinction is made between two types of undesirable noise: the first kind is termed "pull-in noise" and occurs when the armature plate is pulled into contact with the backplate, resulting in steel impacting steel. The pull of the armature plate is activated, for example, by the solenoid (brake armature coil) being energized. The second kind is termed "drop-out noise" and occurs when the armature plate is urged against the friction plate, for example, by means of spring force. This thus occurs as soon as the solenoid is taken out of circuit, i.e. deenergized.

Known means of silencing such noise include the insertion of O-rings or to make use of disc spring coatings which, however, often tend to settle and thus lose their effectiveness with time. Silencing assemblies are also known which, however, as a rule fail to permit simple readjustment or have no means for adapting silencing to any actual circumstances. There is thus a need for a system permitting simple readjustment for silencing means.

Known from an article entitled "Kuhles Stoppen mit Federkraftbremsen" in the June 1991 issue of the German design magazine "Der Konstrukteur" is a means of DC supply for an electromagnetic released brake via a rectifier.
It is known from the German utility model specification DE-GM 18 89 257 to provide such brakes with a circular arrangement of buffer-type bodies.

From Patent Abstracts of Japan, M-1343, Dec. 1992, Vol 16/No. 569 it is known for silencing mechanical impact noise to employ O-rings in annular grooves in the housing of the solenoid concentric thereto and to the longitudinal centerline of the brakes and which slightly protrude from the surface of the housing to contact an opposing armature plate and which are compressed on pull of the armature plate. This assembly of two concentric O-rings fails to be sufficient when higher forces occur and normally fail to have any effect on silencing drop-out noise.

Known from WO 98/21496 of the present applicant is a further means for silencing mechanical brakes making use of elastic rings, more particularly O-rings, in the recesses of a mechanical element opposing another mechanical element for damping impact and vibration. In this arrangement, the O-rings are located eccentric to the longitudinal centerline of the brake and the interior of the O-rings is filled out by a tough flexible plate for guiding the O-rings. However, this known solution also fails to silence drop-out noise in addition to the pull-in noise in all situations.

Accordingly, the objective forming the basis of the present invention is to improve known means of silencing as described above so that, in addition to silencing pull-in noise, the drop-out noise can now be reduced by particularly simple means; preferably the silencing means should also pose no problem in being readjustable for "tuning" to changing situations.

In accordance with the invention this objective is achieved by the characterizing features of the independent claims 1 and 10. In the first case, as it reads from claim 1, the first plurality of damping members is assigned a second plurality of damping members having a significantly lower spring rate and thus higher expansion capacity such that the second plurality of damping members now damps the armature plate even in the drop-out condition, i.e. during braking of the friction plate. In the second case, as it reads from claim 10, the face of the central damping member is configured with two diverse portions, one of which protrudes more axially but is relatively pliant whilst the other portion protrudes less axially and is relatively non-pliant.

Both types of damping members may be axially adjusted with the aid of, for instance, grub screws or the like to permit setting the position of the face of the damping member in the parting plane between the armature plate and backplate.

In all, the mechanical elements provided for silencing pull-in noise and drop-out noise can be mutually adapted, they being selected differing in spring rate for optimum silencing of both pull-in noise and drop-out noise in each being tuned to the other. This adjustment can be made to permit setting the brake when installed and for testing.

Further aspects of the invention read from the claims 2 to 9 and from claim 11.

The present invention will now be detailed by way of three different embodiments as shown in the attached drawings in which:
Fig. 1 is a section view of the brake in accordance with the invention including the novel silencing system in the backplate; the upper half is marked A and the lower half is marked B;
Fig. 2 is a similar section view of a brake including the silencing system in accordance with the invention in the armature plate; again, the upper half is marked A and the lower half is marked B;
Fig. 3 is a further section view of a brake including a further aspect of the silencing principle in accordance with the invention showing, in the upper half marked A, the brake with the armature plate pulled-in electromagnetically, and in the lower half marked B, the brake with the armature plate forced away by compression springs, i.e. in the drop-out condition or braking condition; in the upper half A the solenoid is supplied with current and thus energized and in the lower half B the solenoid is switched off.
Fig. 4 is a detail on a magnified scale taken from the lower half shown in Fig. 3.

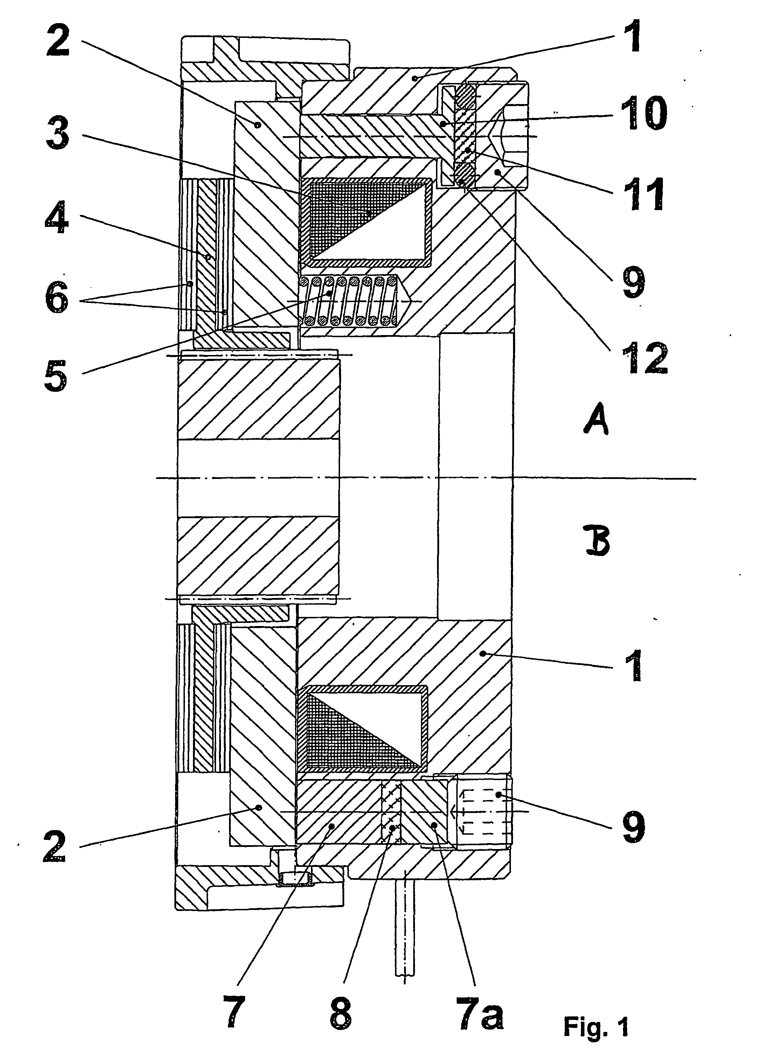

Referring now to Fig. 1 there is illustrated a central hub (not identified by reference numeral) axially serrated to mate with a corresponding serration of the friction plate 4 provided with friction linings 6 on both sides. In the concrete case of this application the hub is seated on a shaft (not shown) of a machine or apparatus needing to be braked.

As viewed axially inwards from the friction plate 4 an armature plate 2 is located axially shiftable but non-rotatably within the brake housing. The armature plate 2 is seated concentric to the longitudinal centerline of the brake and clasps the hub of the parts for guiding the friction plate 4 arranged on the hub. At the other side of the armature plate 2 axially opposite the friction plate 4 there is provided the backplate 1 in which a concentric solenoid 3 together with a series of helical springs 5 distributed equispaced circumferentially.

The conventional zero-current-actuated electromagnetic brake as described thus far includes in addition two diverse silencing systems in the backplate 1 which differ from each other mainly by their significantly different spring rates. The silencing system identified by the reference numerals 7, 8, 9 in Fig. 1 consists of two pin parts 7 located in a hole drilled parallel to the longitudinal centerline and adjusted by means of a grub screw. The pin 7 is made of brass or non-magnetic steel whilst the pin 7a is made of steel or the like, whereas the plastic interlayer 8 separating the two pin parts is made of plastics. The pin part 7 made of antimagnetic material and facing the armature plate 2 is positioned in the corresponding hole drilled axially parallel by the effect or setting of the grub screw such that its face facing the armature plate 2 slightly protrudes beyond the face of the backplate 1 facing the armature plate 2. This results in the armature plate 2 being damped on activation of the solenoid 3 to favorably effect, i.e. to silence, the so-called pull-in noise. This silencing system comprising the elements 7, 8 and 9 is achieved similar to that as included in WO 98 / 21 496 of the present applicant as discussed in the introductory part of the description. This silencing system identified by the reference numerals 7, 8 and 9 has a relatively high spring rate, i.e. steep characteristic, at least as compared to the silencing system identified by the reference numerals 9 - 12 which needs to have a significantly lower spring rate and thus shallow characteristic because it is required to follow the movement of the armature plate 2 on pull-in noise/drop-out of the electromagnet to damp the armature plate 2 also during braking. Due to the damper 8 the pin 7 is able to follow the armature plate down to a nominal air gap. In addition to its silencing action, the damper 8 also serves to prevent premature settling of the elements 11/12 as later detailed.

The two diverse silencing systems are provided multiply distributed circumferentially in the backplate, e.g. symmetrically distributed altematingly staggered around the circumference.

The second silencing system identified by the reference numerals 9 - 12 firstly comprises an axially relatively long antimagnetic pin 10 made of brass or non-magnetic steel. Via an O-ring 12 including a plastics plate 11 arranged in interior thereof this antimagnetic pin 10 is impacted by a grub screw 9 more or less strongly, i.e. with adjustable pressure. As evident from the drawing the antimagnetic pin 10 is able to follow movement of the armature plate 2 when the solenoid 3 is taken out of circuit, i.e. in the helical springs 5 becoming effective to urge the armature plate against the friction plate 4 with its friction linings 6 so that even after drop-out of the armature plate 2, i.e. during braking, it acts on the armature plate 2 to damp any vibrations of the armature plate 2 producing noise. Once the armature plate 2 has been displaced regularly by but a few tenths of a millimeter in the direction of the friction plate 4, as shown in Fig. 1 on drop-out, the antimagnetic pin 10 is able to directly follow this drop-out movement because of its inherently high elasticity and its shifting capacity in thus being able to still influence the armature plate 2 in an active braking action of the brake, i.e. when the armature plate 2 is in the position on the left in contact with the friction plate 4 as shown in Fig. 1.

The element 11, 12 serves mainly for silencing pull-in noise, but also for silencing drop-out noise, since the armature plate is pulled delayed by contact of the dampers.

The element 8 mainly serves for silencing pull-in noise and to avoid premature fatigue of the elements 11, 12 caused by a somewhat harder setting (steeper characteristic by filling out the space available for installation).

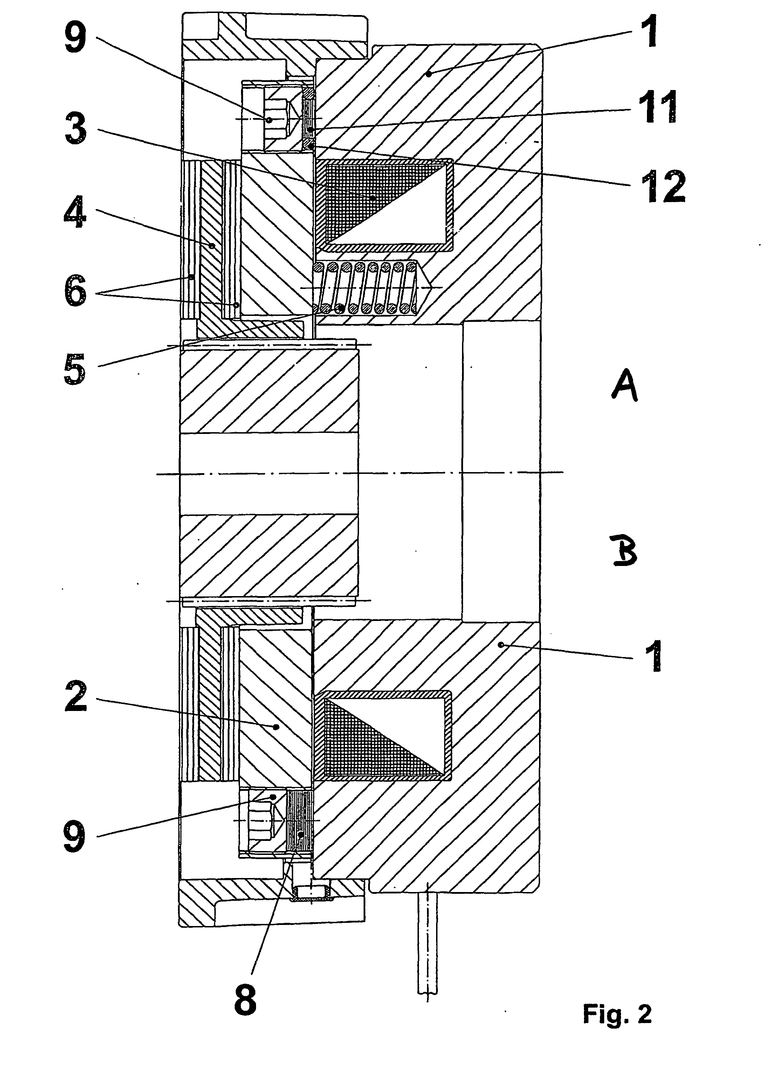

Referring now to Fig. 2 there is illustrated an embodiment which differs from the embodiment as described above with reference to Fig. 1 in that the two diverse silencing systems identified by the reference numerals 8, 9, on the one hand, and 9, 11, 12, on the other, are not arranged in the backplate 1, but in the armature plate 2 from which they cooperate with the opposite face, i.e. of the backplate 1 in just the same way as described above. This means that the damping member 8 made of a suitable plastics needs to have a very much higher spring rate than that of the damping member 11,12 as shown in Fig. 2 which after activation of the brake continues to remain in contact with the face of the backplate for the purpose of silencing the drop-out noise.

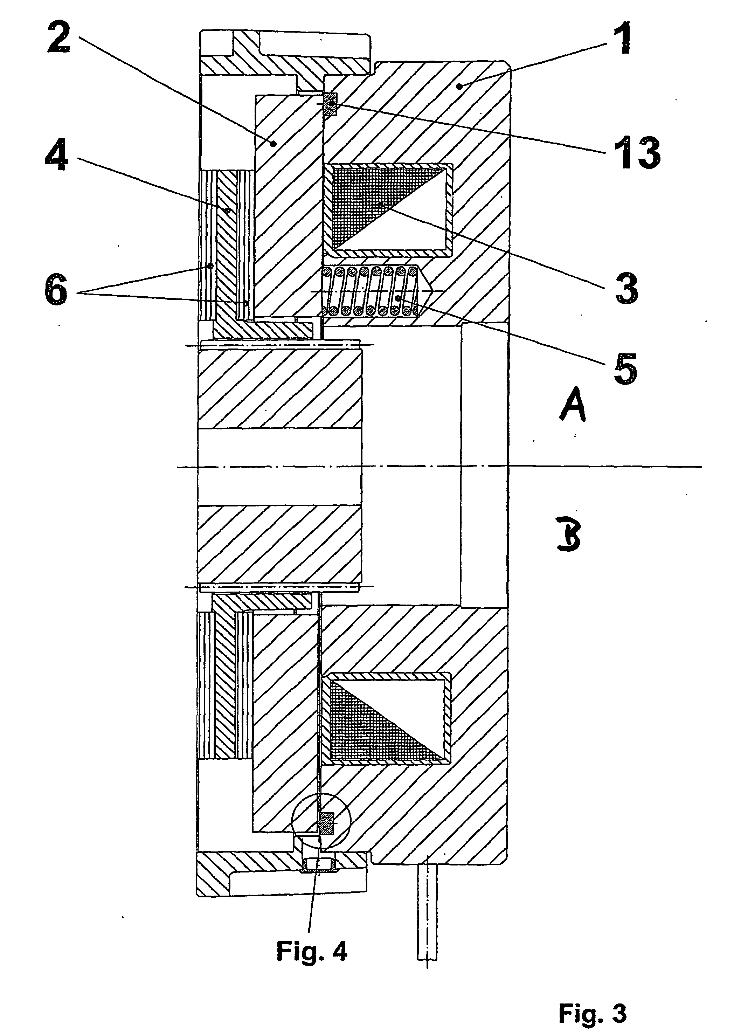

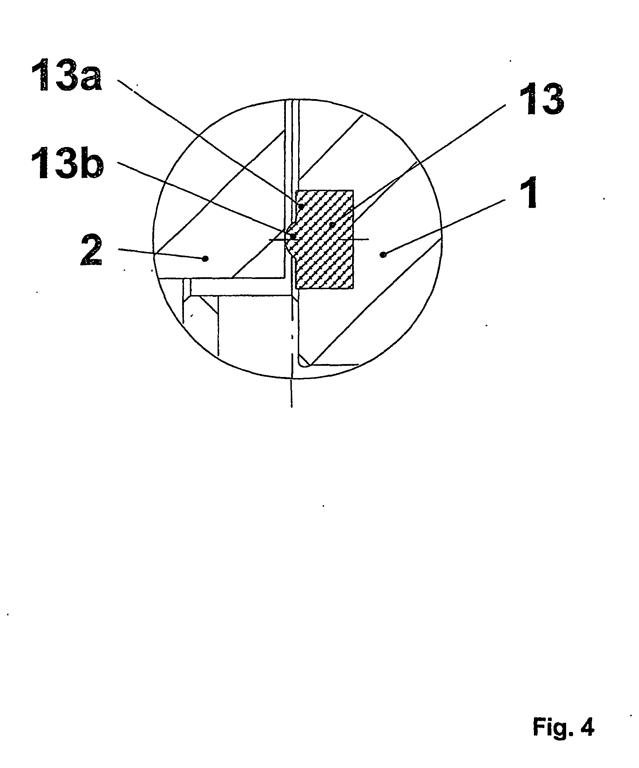

Referring now to Fig. 3 there is illustrated how the same gist is achieved in silencing the armature plate 2 as a function of its final axial setting with differing spring rates. In this case, however, this is achieved by a single central (circulating) central flexible element 13, a magnified detail of which is shown in Fig. 4. This central flexible element 13 which may also be seated in the opposite face of the armature plate 2, similar to that as shown in Fig. 2, comprises, on the one hand, a flat 13a slightly protruding beyond the face of the backplate 1, in the middle of which, however, a bead-type protuberance 13b is provided. Fig. 4 illustrates the effect of this central flexible element with the armature plate 2 deenergized, i.e. showing how the drop-out noise is silenced. When, on the other hand, the armature plate is pulled in by the energized solenoid 3, the armature plate 2 in Fig. 4 is urged more to the right in thereby flattening the middle bead-type part 13b to come into contact with the fully flattened face 13a + 13b of the central flexible element 13 to then act in this position in the sense of silencing pull-in noise, i.e. with a significantly higher spring rate in the above sense.

As aforementioned, the central flexible element 13 as shown in Fig. 3 and Fig.4 could be accommodated like the damping members of the embodiment as shown in Fig. 2 in the armature plate 2 for then cooperating with the opposite face of the backplate 1. It will likewise be appreciated that the central flexible element 13 could also be rendered axially adjustable e.g. by a screw, even though such a possibility is not detailed in the drawings.

The upper half A of the Fig. 1 or Fig. 2 shows the system mainly for silencing drop-out noise whilst the lower half B shows the system mainly involved in silencing pull-in noise.

Pull-in noise silencing: see Fig. 1 lower half B - the armature plate 2 is urged against the antimagnetic pin 7 including a stiff plastic component 8 as an interlayer. The armature plate 2 does not come into contact fully with the backplate 1. Setting this stiff element 7,8 is possible by means of the grub screw.

Drop-out noise silencing: Drop-out movement of the armature plate 2 likewise moves an antimagnetic pin 10 by the force of the O-ring 12 which is guided in an elastic plastics plate 11. In this case, use is made, in all, of a system which is likewise adjustable via grub screws 9.

Tuning: both systems, i.e. for silencing drop-out noise and pull-in noise, must be finely tuned to each other for optimum silencing in both switching conditions.

### List of Reference Numerals

- 1: backplate /solenoid carrier plate
- 2: armature plate
- 3: solenoid
- 4: friction plate
- 5: helical springs
- 6: friction linings
- 7: antimagnetic pin of brass or non-magnetic steel
- 7a: pin of steel or the like
- 8: plastic interlayer/damper
- 9: grub screw
- 10: antimagnetic pin
- 11: plastics plate
- 12: O-ring
- 13: central flexible damping member of suitable plastics
- 13a: flat face portion of 13
- 13b: bead-type face portion of 13

## Claims

1. An electromagnetic compression spring brake comprising a backplate (1) including a solenoid (3) and helical springs (5) distributed equispaced in the backplate (1), a friction plate (4) on a hub of a shaft to be braked, an axially interposed, axially shiftable but non-rotatable armature plate (2) shiftable axially by the helical springs (5) or solenoid (3) into contact with the friction plate (4) or face of the backplate (1), and including a plurality of damping members (7, 8) distributed equispaced about the circumference and featuring a specific spring rate between the opposite faces of the backplate (1) and armature plate (2) for reducing the pull-in noise of the armature plate when impacting the face of the backplate (1),
**characterized by**
a further plurality of damping members (9 to 12) distributed equispaced about the circumference of significantly lower spring rate for continual contact with the opposite face of the backplate (1) also on drop-out of the armature plate (2) for reducing the drop-out noise of the armature plate (2) during braking.

2. The electromagnetic compression spring brake as set forth in claim 1, **characterized in that** the first and second plurality of damping members is arranged in the backplate (1) and act on the opposite face of the armature plate (2).

3. The electromagnetic compression spring brake as set forth in claim 1, **characterized in that** the first and second plurality of damping members is arranged in the armature plate (2) and act on the opposite face of the backplate (1).

4. The electromagnetic compression spring brake as set forth in daim 1, **characterized in that** the first plurality of damping members (7, 8) is arranged in the armature plate (2) and the second plurality of damping members (9-12) in the backplate (1) - or vice-versa - and acts on the opposite face in each case.

5. The electromagnetic compression spring brake as set forth in in claims 1, 2, 3 or 4, **characterized in that** the position of the face of the damping members (7, 8,10,11,12) in the parting plane between the armature plate (2) and backplate (1) is readjustable by means of grub screws (9) or the like.

6. The electromagnetic compression spring brake as set forth in any of the preceding claims, **characterized in that** the damping members (11, 12) are made of rubber or a plastics-like material.

7. The electromagnetic compression spring brake as set forth in any of the preceding claims 1-5, **characterized in that** the damping members are made of steel in diverse configurations such as helical springs, disk springs or the like.

8. The electromagnetic compression spring brake as set forth in any of the preceding claims 1 - 5, **characterized in that** the damping members are configured as elements of a hydraulic or pneumatic kind.

9. The electromagnetic compression spring brake as set forth in any of the preceding claims 1-5, **characterized in that** pins (7, 10) as elements of the damping members (7,8,9 or 9-12) are made of an antimagnetic material to prevent stray flux interference.

10. An electromagnetic compression spring brake comprising a backplate (1) including a solenoid (3) and helical springs (5) distributed equispaced in the backplate (1), a friction plate (4) on a hub of a shaft to be braked, an axially interposed, axially shiftable but non-rotatable armature plate (2) shiftable axially by the helical springs (5) or solenoid (3) into contact with the friction plate (4) or face of the backplate (1) and at least one central flexible damping member (13) whose face is arranged in the parting plane between the armature plate (2) and the face of the backplate (1),
**characterized in that**
the face of the damping member (13) is divided into a large face section (13a) for contacting the pulled-in armature plate (2) to reduce the pull-in noise, and into a smaller axially protruding face section (13b) for continual contact with the opposite face of the dropped out armature plate to reduce the drop-out noise.

11. The electromagnetic compression spring brake as set forth in claim 10, **characterized in that** the position of the face of the damping member (13) in the parting plane between the armature plate and backplate is readjustable by means of grub screws (9) or the like.

## Patentansprüche

1. Elektromagnetische Federdruckbremse mit einem Spulenträger (1) mit einem Elektromagneten (3) und im Spulenträger (1) gleichbeabstandet verteilten Schraubenfedern (5), einem Rotor (4) auf einer Nabe einer abzubremsenden Welle, einer axial dazwischen angeordneten und axial verschieblichen, aber nicht drehbaren Ankerscheibe (2), die von den Schraubenfedern (5) oder dem Elektromagneten (3) zur Anlage am Rotor (4) oder der Stirnfläche des Spulenträgers (1) verschiebbar ist, und einer Vielzahl von auf dem Umfang gleichmäßig verteilten und eine bestimmte Federsteifigkeit aufweisenden Dämpfungsgliedern (7, 8) zwischen den einander zugewandten Stirnflächen des Spulenträgers (1) und der Ankerscheibe (2) zur Reduzierung des Anziehgeräusches der Ankerscheibe beim Aufprall auf die Stirnfläche des Spulenträgers (1),
**gekennzeichnet durch** eine weitere Vielzahl von gleichmäßig verteilten Dämpfungsgliedern (9 bis 12) einer deutlich niedrigeren Federsteifigkeit zur dauernden Anlage an der gegenüberliegenden Stirnfläche des Spulenträgers (1) auch bei abgefallener Ankerscheibe (2) zur Reduzierung des Abfallgeräusches der Ankerscheibe (2) während des Abbremsens.

2. Elektromagnetische Federdruckbremse nach Anspruch 1, **dadurch gekennzeichnet, daß** die erste und die zweite Vielzahl von Dämpfungsgliedern in dem Spulenträger (1) angeordnet sind und auf die gegenüberliegende Stirnfläche der Ankerscheibe (2) wirken.

3. Elektromagnetische Federdruckbremse nach Anspruch 1, **dadurch gekennzeichnet, daß** die erste und die zweite Vielzahl von Dämpfungsgliedern in der Ankerscheibe (2) angeordnet sind und auf die gegenüberliegende Stirnfläche des Spulenträgers (1) wirken.

4. Elektromagnetische Federdruckbremse nach Anspruch 1, **dadurch gekennzeichnet, daß** die erste Vielzahl von Dämpfungsgliedern (7, 8) in der Ankerscheibe (2) und die zweite Vielzahl von Dämpfungsgliedern (9 -12) im Spulenträger (1) angeordnet sind oder umgekehrt und jeweils auf die gegenüberliegende Stirnfläche wirken.

5. Elektromagnetische Federdruckbremse nach Anspruch 1, 2, 3 oder 4, **dadurch gekennzeichnet, daß** die Lage der Stirnfläche der Dämpfungsglieder (7, 8, 10, 11, 12) in der Trennebene zwischen der Ankerscheibe (2) und dem Spulenträger (1) durch Gewindestifte (9) oder dergl. nachjustierbar ist.

6. Elektromagnetische Federdruckbremse nach einem der vorgehenden Ansprüche, **dadurch gekennzeichnet, daß** die Dämpfungsglieder (11, 12) aus Gummi oder einem kunststoffartigen Material hergestellt sind.

7. Elektromagnetische Federdruckbremse nach einem der vorgehenden Ansprüche 1 -5, **dadurch gekennzeichnet, daß** die Dämpfungsglieder aus Stahl in unterschiedlichen Formen wie Schraubenfedern, Tellerfedern oder dergl. hergestellt sind.

8. Elektromagnetische Federdruckbremse nach einem der vorgehenden Ansprüche 1 -5, **dadurch gekennzeichnet, daß** die Dämpfungsglieder als Elemente hydraulischer oder pneumatischer Art ausgebildet sind.

9. Elektromagnetische Federdruckbremse nach einem der vorgehenden Ansprüche 1 -5, **dadurch gekennzeichnet, daß** die Bolzen /7, 10) als Elemente der Dämpfungsglieder (7, 8, 9 oder 9 - 12) aus antimagnetischem Material zur Vermeidung von Streuflüssen bestehen.

10. Elektromagnetische Federdruckbremse mit einem Spulenträger (1) mit einem Elektromagneten (3) und Schraubenfedem (5), die gleichbeabstandet in dem Spulenträger (1) verteilt sind, einem Rotor (4) auf einer Nabe einer abzubremsenden Welle, einer dazwischen angeordneten, axial verschieblichen, aber nicht drehbaren Ankerscheibe (2), die von den Schraubenfedern (5) oder dem Elektromagneten (3) zur Anlage am Rotor (4) oder der Stirnfläche des Spulenträgers (1) verschiebbar ist, und mindestens einem zentralen flexiblen Dämpfungsglied (13), dessen Stirnfläche in der Trennebene zwischen der Ankerscheibe (2) und der Stirnfläche des Spulenträgers (1) angeordnet ist, **dadurch gekennzeichnet, daß** die Stirnfläche des Dämpfungsglieds (13) unterteilt ist zu einem großen Stirnflächenteil (13a) zur Berührung der angezogenen Ankerscheibe (2) zur Reduzierung des Anziehgeräusches und zu einem kleineren, axial vorstehenden Stirnflächenteil (13b) zum andauernden Kontakt mit der gegenüberliegenden Stirnfläche der abgefallenen Ankerscheibe zum Reduzieren des Abfallgeräusches.

11. Elektromagnetische Federdruckbremse nach Anspruch 10, **dadurch gekennzeichnet, daß** die Lage der Stirnfläche des Dämpfungsglieds (13) in der Trennebene zwischen der Ankerscheibe und dem Spulenträger durch Gewindestifte (9) oder dergl. nachjustierbar ist.

## Revendications

1. Frein à ressort de compression électromagnétique comprenant un plateau (1) comportant un solénoïde (3) et des ressorts hélicoïdaux (5) distribués de façon équidistante dans le plateau (1), une plaque de friction (4) sur un moyeu d'un arbre devant être freiné, une plaque d'induit (2) interposée axialement, pouvant être déplacée axialement mais non rotative, pouvant être déplacée axialement par les ressorts hélicoïdaux (5) ou le solénoïde (3) pour venir en contact avec la plaque de friction (4) ou la face du plateau (1), et comprenant une pluralité d'éléments amortisseurs (7, 8) distribués de façon équidistante autour de la circonférence et présentant une constante de rappel spécifique entre les faces opposées du plateau (1) et de la plaque d'induit (2) pour réduire le bruit d'attraction de la plaque d'induit lorsqu'il heurte la face du plateau (1),
**caractérisé par**
une autre pluralité d'éléments amortisseurs (9 à 12) distribués de façon équidistante autour de la circonférence d'une constante de rappel considérablement plus basse pour un contact continu avec la face opposée du plateau (1) également lors du relâchement de la plaque d'induit (2), pour réduire le bruit de relâchement de la plaque d'induit (2) pendant le freinage.

2. Frein à ressort de compression électromagnétique selon la revendication 1, **caractérisé en ce que** la première et la seconde pluralités d'éléments amortisseurs sont agencées dans le plateau (1) et agissent sur la face opposée de la plaque d'induit (2).

3. Frein à ressort de compression électromagnétique selon la revendication 1, **caractérisé en ce que** la première et la seconde pluralités d'éléments amortisseurs sont agencées dans la plaque d'induit (2) et agissent sur la face opposée du plateau (1).

4. Frein à ressort de compression électromagnétique selon la revendication 1, **caractérisé en ce que** la première pluralité d'éléments amortisseurs (7, 8) est agencée dans la plaque d'induit (2) et la seconde pluralité d'éléments amortisseurs (9 à 12) dans le plateau (1) - ou vice versa - et agit sur la face opposée dans chaque cas.

5. Frein à ressort de compression électromagnétique selon les revendications 1, 2, 3 ou 4, **caractérisé en ce que** la position de la face des éléments amortisseurs (7, 8, 10, 11, 12) dans le plan de séparation entre la plaque d'induit (2) et le plateau (1) peut être réajustée au moyen de vis sans tête (9) ou similaires.

6. Frein à ressort de compression électromagnétique selon l'une quelconque des revendications précédentes, **caractérisé en ce que** les éléments amortisseurs (11, 12) sont fabriqués en caoutchouc ou en matériau de type plastique.

7. Frein à ressort de compression électromagnétique selon l'une quelconque des revendications précédentes 1 à 5, **caractérisé en ce que** les éléments amortisseurs sont fabriqués en acier en configurations diverses telles que ressorts hélicoïdaux, ressorts à disque ou similaires.

8. Frein à ressort de compression électromagnétique selon l'une quelconque des revendications précédentes 1 à 5, **caractérisé en ce que** les éléments amortisseurs sont configurés comme éléments d'un type hydraulique ou pneumatique.

9. Frein à ressort de compression électromagnétique selon l'une quelconque des revendications précédentes 1 à 5, **caractérisé en ce que** des broches (7, 10) comme composants des éléments amortisseurs (7, 8, 9 ou 9 à 12) sont fabriqués en un matériau antimagnétique pour éviter une influence de flux parasite.

10. Frein à ressort de compression électromagnétique comprenant un plateau (1) comportant un solénoïde (3) et des ressorts hélicoïdaux (5) distribués de façon équidistante dans le plateau (1), une plaque de friction (4) sur un moyeu d'un arbre devant être freiné, une plaque d'induit (2) interposée axialement, pouvant être déplacée axialement mais non rotative, pouvant être déplacée axialement par les ressorts hélicoïdaux (5) ou le solénoïde (3) pour venir en contact avec la plaque de friction (4) ou la face du plateau (1) et au moins un élément amortisseur flexible central (13) dont la face est agencée dans le plan de séparation entre la plaque d'induit (2) et la face du plateau (1),
**caractérisé en ce que**
la face de l'élément amortisseur (13) est divisée en une grande section de face (13a) destinée à être en contact avec la plaque d'induit en attraction (2) pour réduire le bruit d'attraction, et en une section de face plus petite dépassant axialement (13b) pour un contact continu avec la face opposée de la plaque d'induit relâchée pour réduire le bruit de relâchement.

11. Frein à ressort de compression électromagnétique selon la revendication 10, **caractérisé en ce que** la position de la face de l'élément amortisseur (13) dans le plan de séparation entre la plaque d'induit et le plateau peut être réajustée au moyen de vis sans tête (9) ou similaire.
